# EUROPÄISCHE PATENTSCHRIFT

(11) **EP 1 918 175 B1**
(45) Veröffentlichungstag und Bekanntmachung des Hinweises auf die Patenterteilung: **18.09.2013**
(21) Anmeldenummer: 07020144.7
(22) Anmeldetag: 15.10.2007
(51) Int. Cl.: B62D 6/10

(54) **Lenkwelle mit Drehmomentmesseinheit und Montageverfahren**
Steering shaft with torque measuring unit and assembly method
Arbre de direction doté d'une unité de mesure de couple et procédé de montage

(30) Priorität: 02.11.2006 DE 102006051610; 14.07.2007 DE 102007032907
(43) Veröffentlichungstag der Anmeldung: 07.05.2008
(73) Patentinhaber: Volkswagen Aktiengesellschaft, 38440 Wolfsburg (DE)
(72) Erfinder: Schillak, Christian, 31162 Bad Salzdetfurth (DE); Unger, Thomas, 38104 Braunschweig (DE); Drees, Markus, 30163 Hannover (DE); Schumann, Heiko, 38116 Braunschweig (DE)

(56) Entgegenhaltungen:
- DE-A1- 19 908 459
- US-A- 4 907 668
- US-A- 4 967 858

## Beschreibung

Die Erfindung bezieht sich auf eine Lenkwelle mit einer Drehmomentmesseinheit nach dem Oberbegriff von Patentanspruch 1. Weiterhin bezieht sich die Erfindung auf ein Verfahren zur Montage einer Drehmomentmesseinheit an einer Lenkwelle.

An modernen Fahrzeuglenkungen mit Lenkunterstützung wird unter anderem eine Information über ein vom Fahrer aufgebrachtes Lenkmoment benötigt, um ein Hilfskraftaggregat anzusteuern. Das vom Fahrer aufgebrachte Lenkmoment kann beispielsweise an der Lenkwelle erfasst werden. Hierzu wird an der Lenkwelle mittels eines Sensorelements und eines Geberelements eine Relatiwerdrehung zwischen zwei drehelastisch miteinander gekoppelten Wellenabschnitten abgegriffen. Eine solche Lenkwelle mit einer Drehmomentmesseinheit ist aus DE 101 26 791 A1 bekannt.

Für eine genaue Erfassung des Drehmoments ist eine positionsgenaue sowie dauerhaft stabile Befestigung des Sensorelements und des Geberelements an dem ersten und zweiten Wellenabschnitt von Bedeutung. Jedoch müssen das Sensorelement und das Geberelement bei der Montage vorsichtig gehandhabt werden, um Beschädigungen sowie eine fehlerhafte Befestigung zu vermeiden. So kann beispielsweise durch Störeinflüsse wie hohe Temperaturen, mechanische oder elektrische Spannungen oder chemische Dämpfe die Messgenauigkeit beeinträchtigt werden. Zum anderen soll die Montage mit geringem Zeitaufwand durchführbar sein.

Eine Lenkwelle nach dem Oberbegriff von Patentanspruch 1 ist aus DE 199 08 459 A1 bekannt. Zur Festlegung einer Hülse eines Drehmomentsensors sind eine Vielzahl von in axialer Richtung verlaufenden Nuten in den Außenumfang einer sonsten zylindrischen Fläche an einem ersten Wellenabschnitt eingebracht. In diese Nuten greifen am Innenumfang der Hülse ausgebildete Vorsprünge.

Aus US 4,907,668 und US 4,967,858 ist bekannt, eine Hülse eines Drehmomentsensors an einem ersten Wellenabschnitt mittels eines radialen Stifts festzulegen, der radial in den ersten Wellenabschnitt eingesteckt ist und radial über die Hülse hinaussteht.

Der Erfindung liegt die Aufgabe zugrunde, den eingangs erläuterten Zielkonflikt aufzulösen.

Hierzu wird eine Lenkwelle mit Drehmomentmesseinheit gemäß Patentanspruch 1 vorgeschlagen. Für eine stabile Verbindung zwischen dem ersten Wellenabschnitt und dem Sensorelement weist der Verzahnungsabschnitt des ersten Wellenabschnitts eine höhere Härte auf als die Hülse des Sensorelements. Beim Aufpressen gräbt sich so die Verzahnung in die Hülse, die teilweise plastisch deformiert wird. Die hierbei erzielte Festigkeit der Verbindung ist größer als bei einem glatten Presssitz.

Weiterhin ermöglicht die Erfindung ein Verfahren gemäß Patentanspruch 14. Danach kann das Sensorelement der Drehmomentmesseinheit axial auf den kreiszylindrischen Zentriersitz des ersten Wellenabschnitts aufgeschoben und im weiteren Verlauf des Aufschiebens axial auf den Verzahnungsabschnitt des ersten Wellenabschnitts aufgepresst werden.

Auf diese Weise lässt sich das Sensorelement mit hoher Positionsgenauigkeit verdrehsicher, dauerhaft und stabil an dem ersten Wellenabschnitt befestigen. Aufschieben und Befestigen lassen sich zu einem Arbeitsschritt zusammenfassen. Im Vergleich zu herkömmlichen Befestigungsverfahren wie einem Verkleben, Verschweißen oder Verstemmen ergibt sich eine deutlich verringerte Fertigungszeit. Auf Zusatzstoffe wie Klebstoffe oder Schweißzusatzstoffe kann verzichtet werden. Zudem wird die Gefahr einer Beeinträchtigung der Elektronik des Sensorelements durch Verschmutzung, elektrische Einflüsse, mechanische Verspannungen und Temperatureinwirkung vermieden. Im Falle von schockartig auf das Sensorelement wirkenden Belastungen ergibt sich eine günstige Krafteinleitung.

Weitere, vorteilhafte Ausgestaltungen der Erfindung sind in den Unteransprüchen angegeben.

So kann beispielsweise der minimale Innendurchmesser des Sensorelements größer ausgestaltet werden als der maximale Außendurchmesser des zweiten Wellenabschnitts. Dies ermöglicht eine Montage des Sensorelements nach einem Zusammenfügen des ersten und zweiten Wellenabschnitts. Das Sensorelement kann vor dem Aufschieben auf den ersten Wellenabschnitt zunächst axial über den zweiten Wellenabschnitt bewegt werden, ohne diesen zu berühren.

Weiterhin ist es möglich, die Aufpresskraft während des axialen Aufpressens auf den Verzahnungsabschnitt des ersten Wellenabschnitts zu erfassen. Da die Aufpresskraft stark mit der Qualität der Verbindung korreliert, kann hierdurch auf einfache Weise eine Qualitätsüberwachung realisiert werden.

Gemäß einer weiteren, vorteilhaften Ausgestaltung der Erfindung weist der erste Wellenabschnitt eine Schulter auf. Bei der Montage wird die Hülse axial bis an die Schulter auf den ersten Wellenabschnitt aufgeschoben. Hierdurch lässt sich trotz des axialen Aufpressens auf sehr einfache Art und Weise eine genaue Positionierung des Sensorelements in Axialrichtung verwirklichen.

Von Vorteil ist es ebenfalls, wenn der Verzahnungsabschnitt zwischen dem Zentriersitz und der Schulter angeordnet ist. Der Zentriersitz übernimmt so beim Aufpressen der Hülse auf den Verzahnungsabschnitt eine Führungsfunktion und gewährleistet eine positionsgenaue Befestigung des Sensorelements ohne seitliches Verkanten oder Verrutschen.

In einer vorteilhaften Ausgestaltung ist die Verzahnung als Rändel ausgebildet, dessen Rippen vorzugsweise radial über den Außendurchmesser des Zentriersitzes vorstehen. Auf diese Weise lässt sich ein sogenanntes Übermaß zwischen dem Verzahnungsabschnitt und der Hülse erzielen.

Für eine besonders einfach herzustellende und dauerhaft feste Verbindung zwischen dem ersten Wellenabschnitt und dem Sensorelement ist es von Vorteil, wenn die Hülse des Sensorelements aus einem geeigneten Kunststoff besteht und zwischen dem Verzahnungsabschnitt des ersten Wellenabschnitts und der Hülse des Sensorelements eine formschlüssige Verbindung ausgebildet ist. Zur Herstellung einer solchen formschlüssigen Verbindung zwischen der Hülse des Sensorelements und dem Verzahnungsabschnitt ist es von Vorteil, wenn das Sensorelement mit seiner aus einem Kunststoff ausgebildeten Hülse zunächst über den Zentrierabschnitt des ersten Wellenabschnitts geführt und dann im weiteren Verlauf des Aufschiebens auf den Verzahnungsabschnitt aufgepresst und derart erwärmt und wenigstens teilweise plastifiziert oder aufgeschmolzen wird, dass sich die Hülse innen an die Struktur des Verzahnungsabschnitts anformt. Es erfolgt somit eine Warmeinbettung des Verzahnungsabschnitts in die Hülse des Sensorelements.

Die Erwärmung der Hülse erfolgt zweckmäßigerweise über den zuvor ausreichend erwärmten Verzahnungsabschnitt des ersten Wellenabschnitts. Nach dem Abkühlen und Erstarren des Kunststoffmaterials der Hülse ist durch Warmeinbettung eine spielfreie formschlüssige und hochfeste, spannungsarme Verbindung zwischen der Hülse des Sensorelements und dem Verzahnungsabschnitt des ersten Wellenabschnitts entstanden. Dabei wird zudem ein Ausgleich von eventuell vorhandenen Toleranzen der Hülse des Sensorelements und des Verzahnungsabschnitts ermöglicht. Die Erwärmung des ersten Wellenabschnitts bzw. des Verzahnungsabschnitts kann berührend oder induktiv erfolgen. Vorteilhafte Verfahren sind z.B. das elektromagnetische Widerstandsschweißen oder das Ultraschall-Einschweißen.

Wird eine Hülse aus Kunststoff verwendet ist es zudem möglich, die Hülse und das Gehäuse des Sensorelements einteilig aus einem geeigneten Kunststoff auszubilden. Auf diese Weise kann auf eine separate Hülse als zusätzliches Bauteil verzichtet werden.

Bei einer Lenkwelle, bei der eine Eingangswelle und eine Ausgangswelle beispielsweise über einen Drehstab verbunden sind, wird das Sensorelement bevorzugt an der Ausgangswelle angeordnet. Der erste Wellenabschnitt kann daher mit einem Lenkritzel versehen sein. Prinzipiell ist es jedoch auch möglich, das Sensorelement an der Eingangswelle und das Geberelement an der Ausgangswelle anzuordnen.

Bevorzugt ist an dem zweiten Wellenabschnitt ein Geberelement axial abgestützt. Dies kann beispielsweise über eine an dem zweiten Wellenabschnitt ausgebildete Schulter erfolgen, um eine exakte Positionierung zu erzielen. Jedoch kann das Geberelement auch in anderer Weise an dem zweiten Wellenabschnitt befestigt sein. Als Geberelement ist vorzugsweise ein Magnetring vorgesehen, der dem Sensorelement berührungsfrei gegenüberliegt und mit diesem zur Erfassung einer Relativverdrehung zwischen dem ersten Wellenabschnitt und dem zweiten Wellenabschnitt zusammenwirkt. Dazu kann das Sensorelement eine ringförmig zu der Hülse angeordnete Aufnehmereinrichtung aufweisen.

Nachfolgend wird die Erfindung anhand der Zeichnung näher erläutert. Die Zeichnung zeigt in:
- Figur 1: eine Teilexplosionsdarstellung einer Lenkwelle mit einer Drehmomentmesseinheit nach einem Ausführungsbeispiel der Erfindung, und in
- Figur 2: eine Detailansicht eines ersten Wellenabschnitts der Lenkwelle mit einem an diesem befestigten Sensorelement der Drehmomentmesseinheit.

Die Ausführungsbeispiele beziehen sich auf eine Fahrzeuglenkung, insbesondere eine, Zahnstangenlenkung mit Lenkunterstützung.

Die Lenkwelle 1 der Fahrzeuglenkung umfasst einen ersten Wellenabschnitt 2 und einen drehelastisch mit diesem gekoppelten zweiten Wellenabschnitt 3. Wird auf die Lenkwelle 1 ein Drehmoment ausgeübt, so kommt es zwischen dem ersten Wellenabschnitt 2 und dem zweiten Wellenabschnitt 3 zu einer von der Elastizität der Koppelung abhängigen Relativverdrehung. Diese kann mittels einer nachfolgend näher erläuterten Drehmomentmesseinheit 4 erfasst werden, welche in Abhängigkeit der Relativverdrehung ein Ausgangssignal erzeugt. Durch Auswertung des Ausgangssignals lässt sich das anliegende Drehmoment ermitteln.

Die Kopplung des ersten Wellenabschnitts 2 mit dem zweiten Wellenabschnitt 3 kann in herkömmlicher Weise über einen Torsionsstab erfolgen, wie dies beispielsweise in der DE 101 26 791 A1 dargestellt ist. Jedoch sind auch andere drehelastische Kopplungselemente einsetzbar. Überdies ist es denkbar, die beiden Wellenabschnitte 2 und 3 einstückig miteinander auszubilden, wobei zwischen diesen zusätzlich ein torsionsweicher Wellenabschnitt vorgesehen sein kann.

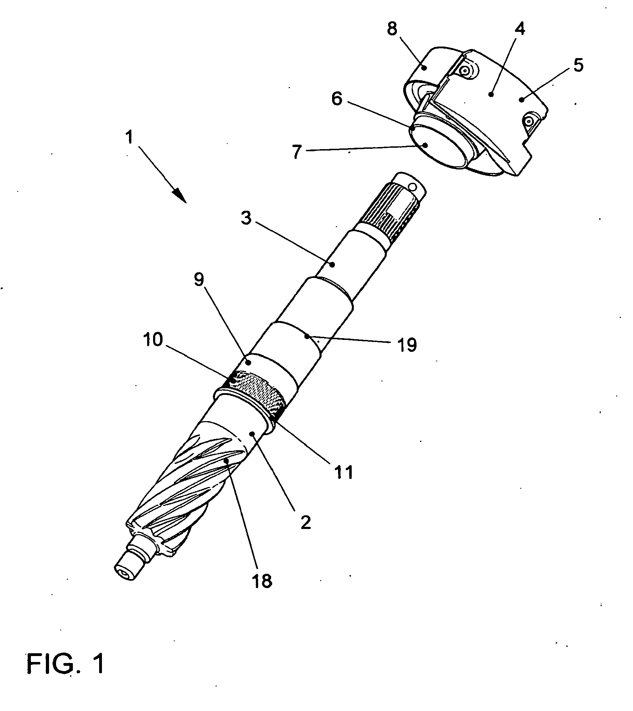

Bei dem in Figur 1 dargestellten Ausführungsbeispiel ist der erste Wellenabschnitt 2 als Ausgangswelle ausgestaltet, an der ein Lenkritzel 18 zum Eingriff in eine nicht dargestellte Zahnstange der Lenkung vorgesehen ist. Dieses Lenkritzel 18 kann unmittelbar an einem Endabschnitt der Ausgangswelle ausgebildet sein. Der zweite Wellenabschnitt 3 ist als Eingangswelle ausgestaltet, die mit einem nicht dargestellten Lenkrad in Wirkverbindung steht und in Richtung des Lenkrads führt.

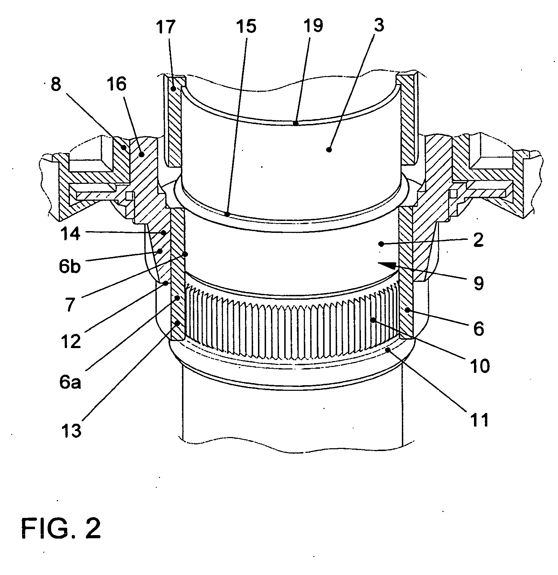

Die an der Lenkwelle 1 vorgesehene Drehmomentmesseinheit 4 umfasst ein Sensorelement 5, das im montierten Zustand an dem ersten Wellenabschnitt 2 befestigt ist, sowie ein nicht näher dargestelltes Geberelement 17, das an dem zweiten Wellenabschnitt 3 vorgesehen ist (Fig. 2). Das Geberelement 17 stützt sich an einer Schulter 19 des zweiten Wellenabschnitts 3 ab und ist so axial exakt positionierbar.

Das Sensorelement 5 weist eine Hülse 6 mit einer kreiszylindrischen Durchgangsöffnung 7 auf. Um die Hülse 6 ist eine Aufnehmereinrichtung 8 angeordnet, die mit dem Geberelement zur Erfassung einer Relativverdrehung zwischen dem ersten Wellenabschnitt 2 und dem zweiten Wellenabschnitt 3 der Lenkwelle 1 zusammenwirkt. Weiterhin befindet sich an dem Sensorelement 5 eine nicht dargestellte Anschlusseinrichtung, über die ein elektrisches Ausgangssignal zur Bestimmung des Drehmoments abgreifbar ist.

Das Geberelement 17 an dem zweiten Wellenabschnitt 3 ist beispielsweise ein Magnetring, der dem Sensorelement 5 berührungsfrei gegenüberliegt.

Zur verdrehsicheren Befestigung des Sensorelements 5 weist der erste Wellenabschnitt 2 neben einem kreiszylindrischen Zentriersitz 9 zusätzlich einen Verzahnungsabschnitt 10 auf. Der Verzahnungsabschnitt 10 ist beispielsweise ein Rändel, dessen Rippen radial etwas über den Zentriersitz 9 hinausstehen. Weiterhin ist an dem ersten Wellenabschnitt 2 eine Schulter 11 als Anlage für die Hülse 6 des Sensorelements 5 ausgebildet. Bei dem dargestellten Ausführungsbeispiel ist der Verzahnungsabschnitt 10 zwischen dem Zentriersitz 9 und der Schulter 11 angeordnet. Dabei liegt der Zentriersitz 9 am nächsten zu dem zweiten Wellenabschnitt 3. Wie Figur 2 zeigt, können zwischen dem Zentriersitz 9 und dem Verzahnungsabschnitt 10 ein erster Freistich 20 in Form einer umlaufenden ringförmigen Nut sowie zwischen dem Verzahnungsabschnitt 10 und der als Anschlag beim Aufschieben des Sensorelements 5 dienenden Schulter 11 ein zweiter Freistich 21, ebenfalls in Form einer umlaufenden ringförmigen Nut, vorgesehen sein. Diese Freistiche 20 und 21 dienen zur Verbesserung der axialen Sicherung der Hülse 6. Aus dem gleichen Grund kann in axialer Richtung zwischen den beiden Freistichen 20 und 21 zumindest ein weiterer Freistich vorgesehen sein, z.B. mittig zwischen den beiden Freistichen 20 und 21.

Alternativ ist beispielsweise auch eine Kreuzrändelung möglich, bei der gegebenenfalls auf die Freistiche 20, 21 verzichtet werden kann.

Im fertig montierten Zustand (Figur 2) sitzt die Hülse 6 auf dem Zentriersitz 9 und dem Verzahnungsabschnitt 10 und liegt dabei gleichzeitig axial an der Schulter 11 an. Die Hülse 6 ist gegenüber der Aufnehmereinrichtung 8 des Sensorelements 5 axial versetzt angeordnet und weist einen sich in Richtung der Schulter 11 verjüngenden Außendurchmesser auf. Bei dem dargestellten Ausführungsbeispiel ist an der Hülse 6 im Bereich des Übergangs zwischen dem Zentriersitz 9 und dem Verzahnungsabschnitt 10 außenseitig eine Stufe 12 ausgebildet. Während ein Endabschnitt 13 der Hülse 6 im Bereich des Verzahnungsabschnitts 10 eine im Wesentlichen konstante Wanddicke aufweist, nimmt die Wanddicke in einem Übergangsabschnitt 14 zu der Aufnehmereinrichtung 8 kontinuierlich zu. Es ist jedoch auch ein kontinuierlicher Durchmesserübergang vom schulterseitigen Ende der Hülse 6 bis zum Aufnehmerabschnitt 8 möglich.

Die Hülse 6 kann als einstückiges Bauteil ausgeführt werden. Es ist jedoch wie dargestellt auch möglich, diese beispielsweise mit einer Innenhülse 6a konstanter Wandstärke zu fertigen, welche mit dem Verzahnungsabschnitt 10 verklemmt und axial an der Schulter 11 abgestützt ist. Am Außenumfang der Innenhülse 6a ist ein Außenteil 6b angespritzt ist, welches bei dem dargestellten Ausführungsbeispiel u.a. für die Verjüngung im Übergangsabschnitt 14 sorgt. Die Innenhülse 6a besteht hierbei bevorzugt aus einem metallischen Werkstoff, der weicher als der Werkstoff des Verzahnungsabschnitts 10 ist, wohingegen das Außenteil 6b vorzugsweise aus Kunststoff hergestellt ist.

Wie Figur 2 weiter zeigt, erstreckt sich das Sensorelement 5 axial über eine Fuge 15 zwischen dem ersten Wellenabschnitt 2 und dem zweiten Wellenabschnitt 3 hinaus. Die Hülse 6 endet vor dieser Fuge 15. Im Bereich der Aufnahmeeinrichtung 8 ist eine Erweiterung 16 des Innendurchmessers des Sensorelements 5 vorgesehen, so dass zwischen dem Sensorelement 5 und dem zweiten Wellenabschnitt 3 ein Ringraum gebildet wird, welcher gegebenenfalls ein radiales Umgreifen des Geberelements 17 ermöglicht, so dass dieses nach außen gut geschützt ist.

Die Montage der Drehmomentmesseinheit 4 erfolgt vorzugsweise auf die bereits vormontierte Lenkwelle 1. Da der maximale Außendurchmesser des zweiten Wellenabschnitts 3 kleiner als der Innendurchmesser der Hülse 6 ist, kann das Sensorelement 5 im Prinzip berührungsfrei über den zweiten Wellenabschnitt 3 geschoben werden.

Bei der Montage des Sensorelements 5 an dem ersten Wellenabschnitt 2 gelangt dieses zunächst mit seiner innen glatten Hülse 6 in Eingriff mit dem Zentriersitz 9 und wird an diesem zur radialen Ausrichtung axial geführt. Hierzu ist zwischen der Durchgangsöffnung 7 der Hülse 6 und dem Zentriersitz 9 eine Spielpassung mit geringem Spiel vorgesehen. Möglich ist aber auch eine Ausrichtung der Drehmomentmesseinheit 4 gegenüber der Lenkwelle 1 über den äußeren Durchmesser eines äußeren Fortsatzes der Hülse 6 oder an anderer Stelle.

Im weiteren Verlauf des Aufschiebens gelangt die Hülse 6 in Eingriff mit dem Verzahnungsabschnitts 10. Durch die Führung der Hülse 6 an dem Zentrierabschnitt 9 bleibt die Hülse 6 beim axialen Aufpressen auf den Verzahnungsabschnitt 10 zu der Drehachse des ersten Wellenabschnitts 2 ausgerichtet.

Während des axialen Aufpressens graben sich die Zähne des härteren Verzahnungsabschnitts 10 in die weichere Hülse 6 ein, wodurch eine sehr stabile Verbindung erzielt wird. Vorzugsweise ist der Verzahnungsabschnitt 10 einsatzgehärtet, während die Hülse 6 aus einem weicheren Stahl oder auch aus einem anderen weicheren Werkstoff, beispielsweise auch Kunststoff, besteht.

Die Hülse 6 wird solange aufgepresst, bis diese mit ihrer Stirnseite gegen die Schulter 11 anläuft. Hierdurch wird trotz der axialen Aufpresskräfte eine in Axialrichtung genaue Positionierung des Sensorelements 5 relativ zu dem Geberelement 17 erzielt, das über eine Schulter 19 an dem zweiten Wellenabschnitt 3 in Axialrichtung exakt positionierbar ist.

Eine weitere Fixierung des Sensorelements 5 an dem ersten Wellenabschnitt 2 ist nicht erforderlich.

Durch die Integration des Befestigungsschritts in das axiale Aufschieben wird im Vergleich zu anderen Befestigungsverfahren eine ausgesprochen kurze Fertigungszeit erzielt.

Überdies weist dieser Vorgang eine hohe Prozesssicherheit auf und lässt sich gut überwachen. So kann während des Aufpressens die axiale Aufpresskraft überwacht und als Entscheidungskriterium für die Beurteilung der Verbindungsqualität herangezogen werden. Zudem wird eine Beeinträchtigung des Sensorelements 5 und der an diesem befindlichen Elektronik durch den Befestigungsvorgang vermieden.

Ist die Hülse 6 des Sensorelements 5 aus einem geeigneten Kunststoff ausgebildet, so ist es gemäß eines weiteren erfindungsgemäßen Ausführungsbeispiels möglich, zur Herstellung einer formschlüssigen Verbindung zwischen der Hülse 6 des Sensorelements 5 und dem Verzahnungsabschnitt 10 des ersten Wellenabschnitts 2 zunächst die Hülse 6 über den Zentrierabschnitt 9 zu führen und dann im weiteren Verlauf des Aufschiebens auf den zuvor erwärmten Verzahnungsabschnitt 10 aufzupressen. Dabei wird das Kunststoffmaterial der Hülse 6 durch den Kontakt mit dem erwärmten Verzahnungsabschnitt 10 wenigstens teilweise, nämlich in dem den Verzahnungsabschnitt 10 umschließenden inneren Bereich derart erwärmt und plastifiziert, also in den plastischen, zähflüssigen Zustand überführt, dass sich die Hülse 6 im Bereich ihrer Durchgangsöffnung 7 innen an die Struktur des Verzahnungsabschnitts 10 anformt. Nach dem Abkühlen und Erstarren des Kunststoffmaterials der Hülse 6 ist durch die Warmeinbettung eine spielfreie formschlüssige und hochfeste Verbindung zwischen der Hülse 6 des Sensorelements 5 und dem Verzahnungsabschnitt 10 des ersten Wellenabschnitts 2 entstanden. Die Erwärmung des ersten Wellenabschnitts 2 bzw. des Verzahnungsabschnitts 10 kann berührend oder induktiv erfolgen. Vorteilhafte Verfahren sind z.B. das elektromagnetische Widerstandsschweißen oder das Ultraschall-Einschweißen. Auf diese Weise lässt sich eine besonders feste, spielfreie und verdrehsichere Verbindung zwischen der Hülse 6 des Sensorelements 5 und dem Verzahnungsabschnitt 10 einfach, kostengünstig und schnell herzustellen. Sind Freistiche 20, 21vorgesehen, so stellt insbesondere auch beim Warmeinbetten in diese eindringendes Kunststoffmaterial eine wirkungsvolle axiale Sicherung des Sensorelements 5 her. Darüber hinaus lässt sich bei Verwendung einer aus Kunststoff bestehenden Hülse 6 der Kunststoffanteil des Sensorelements 5 insgesamt erhöhen, wodurch die Schlagzähigkeit des Sensorelements 5 verbessert wird.

Die Erfindung wurde anhand vorstehender Ausführungsbeispiele näher erläutert. Sie ist jedoch nicht auf diese Ausführungsbeispiele beschränkt, sondern umfasst alle durch die Patentansprüche definierten Ausgestaltungen.

### Bezugszeichenliste

- 1: Lenkwelle
- 2: erster Wellenabschnitt
- 3: zweiter Wellenabschnitt
- 4: Drehmomentmesseinheit
- 5: Sensorelement
- 6: Hülse
- 6a: Innenhülse
- 6b: Außenteil
- 7: Durchgangsöffnung
- 8: Aufnehmereinrichtung
- 9: Zentriersitz
- 10: Verzahnungsabschnitt
- 11: Schulter
- 12: Stufe
- 13: Endabschnitt
- 14: Übergangsabschnitt
- 15: Fuge
- 16: Erweiterung
- 17: Geberelement
- 18: Lenkritzel
- 19: Schulter
- 20: erster Freistich
- 21: zweiter Freistich

## Patentansprüche

1. Lenkwelle (1) mit einer Drehmomentmesseinheit (4), umfassend einen ersten Wellenabschnitt (2) und einen zweiten Wellenabschnitt (3), die drehelastisch miteinander gekoppelt sind, wobei ein Sensorelement (5) an dem ersten Wellenabschnitt (2) und ein Geberelement (17) an dem zweiten Wellenabschnitt (3) vorgesehen sind, wobei der erste Wellenabschnitt (2) einen kreiszylindrischen Zentriersitz (9) sowie einen Verzahnungsabschnitt (10) aufweist, und das Sensorelement (5) eine Hülse (6) mit einer kreiszylindrischen Durchgangsöffnung (7) aufweist und mit dieser an dem Zentriersitz (9) geführt und auf den Verzahnungsabschnitt (10) axial aufgepresst ist, **dadurch gekennzeichnet, dass** der Verzahnungsabschnitt (10) eine höhere Härte aufweist als die Hülse (6) des Sensorelements (5).

2. Lenkwelle nach Anspruch 1, **dadurch gekennzeichnet, dass** der erste Wellenabschnitt (2) eine Schulter (11) aufweist und die Hülse (6) axial bis an die Schulter (11) auf den ersten Wellenabschnitt (2) aufgeschoben ist.

3. Lenkwelle nach Anspruch 1 oder 2, **dadurch gekennzeichnet, dass** der kleinste Innendurchmesser des Sensorelements (5) größer ist als der maximale Außendurchmesser des zweiten Wellenabschnitts (3).

4. Lenkwelle nach einem der Ansprüche 1 bis 3, **dadurch gekennzeichnet, dass** der Zentriersitz (9) und der Verzahnungsabschnitt (10) axial derart hintereinanderliegend angeordnet sind, dass bei der Montage des Sensorelements (5) an dem ersten Wellenabschnitt (2) die Hülse (6) zunächst mit dem Zentriersitz (9) in Eingriff gelangt und an diesem zur radialen Ausrichtung axial geführt wird und im weiteren Verlauf des Aufschiebens mit dem Verzahnungsabschnitt (10) in Eingriff gelangt.

5. Lenkwelle nach einem der Ansprüche 1 bis 4, **dadurch gekennzeichnet, dass** die Hülse (6) des Sensorelements (5) aus einem Kunststoff ausgebildet ist.

6. Lenkwelle nach einem der Ansprüche 1 bis 5, **dadurch gekennzeichnet, dass** zwischen dem Verzahnungsabschnitt (10) des ersten Wellenabschnitts (2) und der Hülse (6) des Sensorelements (5) eine formschlüssige Verbindung ausgebildet ist.

7. Lenkwelle nach Anspruch 6, **dadurch gekennzeichnet, dass** die formschlüssige Verbindung zwischen dem Verzahnungsabschnitt (10) und der Hülse (6) durch Warmeinbettung ausgebildet ist.

8. Lenkwelle nach einem der Ansprüche 2 bis 7, **dadurch gekennzeichnet, dass** der Verzahnungsabschnitt (10) zwischen dem Zentriersitz (9) und der Schulter (11) angeordnet ist.

9. Lenkwelle nach einem der Ansprüche 1 bis 8, **dadurch gekennzeichnet, dass** der Verzahnungsabschnitt (10) als Rändel ausgebildet ist, dessen Rippen radial über den Außendurchmesser des Zentriersitzes vorstehen.

10. Lenkwelle nach einem der Ansprüche 1 bis 9, **dadurch gekennzeichnet, dass** an dem ersten Wellenabschnitt (2) ein Lenkritzel (18) vorgesehen ist.

11. Lenkwelle nach einem der Ansprüche 1 bis 10, **dadurch gekennzeichnet, dass** das Sensorelement (5) eine ringförmig angeordnete Aufnehmereinrichtung (8) aufweist.

12. Lenkwelle nach einem der Ansprüche 1 bis 11, **dadurch gekennzeichnet, dass** ein Geberelement (17) an einer Schulter (19) des zweiten Wellenabschnitts (3) axial positioniert ist, wobei das Geberelement (17) dem Sensorelement (5) berührungsfrei gegenüberliegt und mit diesem zur Erfassung einer Relatiwerdrehung zwischen dem ersten Wellenabschnitt (2) und dem zweiten Wellenabschnitt (3) zusammenwirkt.

13. Lenkwelle nach einem der Ansprüche 1 bis 12, **dadurch gekennzeichnet, dass** an dem zweiten Wellenabschnitt (3) als Geberelement (17) ein Magnetring vorgesehen ist, der dem Sensorelement (5) berührungsfrei gegenüberliegt und mit diesem zur Erfassung einer Relativverdrehung zwischen dem ersten Wellenabschnitt (2) und dem zweiten Wellenabschnitt (3) zusammenwirkt.

14. Verfahren zur Montage einer Drehmomentmesseinheit (4) an einer Lenkwelle (1), die einen ersten Wellenabschnitt (2) und einen mit diesem drehelastisch gekoppelten zweiten Wellenabschnitt (3) aufweist, **dadurch gekennzeichnet, dass** ein Sensorelement (5) der Drehmomentmesseinheit (4) axial auf einen kreiszylindrischen Zentriersitz (9) des ersten Wellenabschnitts (2) aufgeschoben und im weiteren Verlauf des Aufschiebens axial auf einen Verzahnungsabschnitt (10) des ersten Wellenabschnitt (2) aufgepresst wird.

15. Verfahren nach Anspruch 14, **dadurch gekennzeichnet, dass** das Sensorelement (5) vor dem Aufschieben auf den ersten Wellenabschnitt (2) zunächst axial über den zweiten Wellenabschnitt (3) bewegt wird, ohne diesen zu berühren.

16. Verfahren nach Anspruch 14 oder 15, **dadurch gekennzeichnet, dass** die Aufpresskraft während des axialen Aufpressens auf den Verzahnungsabschnitt (10) des ersten Wellenabschnitts (2) erfasst wird.

17. Verfahren nach einem der Ansprüche 14 bis 16, **dadurch gekennzeichnet, dass** zur Herstellung einer formschlüssigen Verbindung zwischen der Hülse (6) des Sensorelements (5) und dem Verzahnungsabschnitt (10) des ersten Wellenabschnitts (2) eine aus einem Kunststoff bestehende Hülse (6), mit der das Sensorelement (5) auf den Verzahnungsabschnitt (10) aufgepresst ist, erwärmt und wenigstens teilweise plastifiziert oder aufgeschmolzen wird.

## Claims

1. Steering shaft (1) having a torque measuring unit (4), comprising a first shaft section (2) and a second shaft section (3) which are coupled to one another in a rotationally elastic manner, a sensor element (5) being provided on the first shaft section (2) and an encoder element (17) being provided on the second shaft section (3), the first shaft section (2) having a circularly cylindrical centring seat (9) and a toothing section (10), and the sensor element (5) having a sleeve (6) with a circularly cylindrical through opening (7) and being guided therewith on the centring seat (9) and being pressed axially onto the toothing section (10), **characterized in that** the toothing section (10) has a greater hardness than the sleeve (6) of the sensor element (5).

2. Steering shaft according to Claim 1, **characterized in that** the first shaft section (2) has a shoulder (11) and the sleeve (6) is pushed axially onto the first shaft section (2) as far as the shoulder (11).

3. Steering shaft according to Claim 1 or 2, **characterized in that** the smallest internal diameter of the sensor element (5) is greater than the maximum external diameter of the second shaft section (3).

4. Steering shaft according to one of Claims 1 to 3, **characterized in that** the centring seat (9) and the toothing section (10) are arranged so as to lie axially behind one another in such a way that, during the mounting of the sensor element (5) on the first shaft section (2), the sleeve (6) first of all passes into engagement with the centring seat (9) and is guided axially on the latter for radial orientation and passes into engagement with the toothing section (10) during the further course of being pushed on.

5. Steering shaft according to one of Claims 1 to 4, **characterized in that** the sleeve (6) of the sensor element (5) is formed from a plastic.

6. Steering shaft according to one of Claims 1 to 5, **characterized in that** a positively locking connection is formed between the toothing section (10) of the first shaft section (2) and the sleeve (6) of the sensor element (5).

7. Steering shaft according to Claim 6, **characterized in that** the positively locking connection between the toothing section (10) and the sleeve (6) is formed by warm embedding.

8. Steering shaft according to one of Claims 2 to 7, **characterized in that** the toothing section (10) is arranged between the centring seat (9) and the shoulder (11).

9. Steering shaft according to one of Claims 1 to 8, **characterized in that** the toothing section (10) is configured as a knurled portion, the ribs of which project radially beyond the external diameter of the centring seat.

10. Steering shaft according to one of Claims 1 to 9, **characterized in that** a steering pinion (18) is provided on the first shaft section (2).

11. Steering shaft according to one of Claims 1 to 10, **characterized in that** the sensor element (5) has an annularly arranged pickup device (8).

12. Steering shaft according to one of Claims 1 to 11, **characterized in that** an encoder element (17) is positioned axially on a shoulder (19) of the second shaft section (3), the encoder element (17) lying opposite the sensor element (5) without contact and interacting with the latter in order to detect a relative rotation between the first shaft section (2) and the second shaft section (3).

13. Steering shaft according to one of Claims 1 to 12, **characterized in that** a magnet ring is provided as encoder element (17) on the second shaft section (3), which magnet ring lies opposite the sensor element (5) without contact and interacts with the latter in order to detect a relative rotation between the first shaft section (2) and the second shaft section (3).

14. Method for mounting a torque measuring unit (4) on a steering shaft (1) which has a first shaft section (2) and a second shaft section (3) which is coupled to the former in a rotationally elastic manner, **characterized in that** a sensor element (5) of the torque measuring unit (4) is pushed axially onto a circularly cylindrical centring seat (9) of the first shaft section (2) and is pressed axially onto a toothing section (10) of the first shaft section (2) during the further course of being pushed on.

15. Method according to Claim 14, **characterized in that**, before being pushed onto the first shaft section (2), the sensor element (5) is first of all moved axially over the second shaft section (3), without coming into contact with the latter.

16. Method according to Claim 14 or 15, **characterized in that** the pressing force during the axial pressing onto the toothing section (10) of the first shaft section (2) is detected.

17. Method according to one of Claims 14 to 16, **characterized in that**, in order to produce a positively locking connection between the sleeve (6) of the sensor element (5) and the toothing section (10) of the first shaft section (2), a sleeve (6) which is composed of a plastic and by way of which the sensor element (5) is pressed onto the toothing section (10) is heated and is plasticized or melted at least partially.

## Revendications

1. Arbre de direction (1) muni d'une unité de mesure de couple (4), comprenant une première portion d'arbre (2) et une deuxième portion d'arbre (3) qui sont reliées entre elles en rotation flexible, un élément de détection (5) étant prévu sur la première portion d'arbre (2) et un élément de codage (17) sur la deuxième portion d'arbre (3), la première portion d'arbre (2) présentant un siège de centrage (9) cylindrique circulaire ainsi qu'une portion dentée (10) et l'élément de détection (5) présentant une douille (6) munie d'une ouverture de passage (7) cylindrique circulaire et étant guidé avec celle-ci au niveau du siège de centrage (9) et poussé dans le sens axial sur la porion dentée (10), **caractérisé en ce que** la portion dentée (10) présente une dureté supérieure à celle de la douille (6) de l'élément de détection (5).

2. Arbre de direction selon la revendication 1, **caractérisé en ce que** la première portion d'arbre (2) présente un épaulement (11) et la douille (6) est emmanchée dans le sens axial sur la première portion d'arbre (2) jusqu'à l'épaulement (11).

3. Arbre de direction selon la revendication 1 ou 2, **caractérisé en ce que** le plus petit diamètre intérieur de l'élément de détection (5) est plus grand que le diamètre extérieur maximum de la deuxième portion d'arbre (3).

4. Arbre de direction selon l'une des revendications 1 à 3, **caractérisé en ce que** le siège de centrage (9) et la portion dentée (10) sont disposés l'un derrière l'autre dans le sens axial de telle sorte que lors du montage de l'élément de détection (5) sur la première portion d'arbre (2), la douille (6) vient tout d'abord en prise avec le siège de centrage (9), puis est guidée sur celui-ci dans le sens axial en vue d'un alignement radial, et vient en prise avec la portion dentée (10) lors de la poursuite de l'emmanchement.

5. Arbre de direction selon l'une des revendications 1 à 4, **caractérisé en ce que** la douille (6) de l'élément de détection (5) est réalisée en matière plastique.

6. Arbre de direction selon l'une des revendications 1 à 5, **caractérisé en ce qu'**une liaison par complémentarité de forme est réalisée entre la portion dentée (10) de la première portion d'arbre (2) et la douille (6) de l'élément de détection (5).

7. Arbre de direction selon la revendication 6, **caractérisé en ce que** la liaison par complémentarité de forme entre la portion dentée (10) et la douille (6) est réalisée par encastrement à chaud.

8. Arbre de direction selon l'une des revendications 2 à 7, **caractérisé en ce que** la portion dentée (10) est disposée entre le siège de centrage (9) et l'épaulement (11).

9. Arbre de direction selon l'une des revendications 1 à 8, **caractérisé en ce que** la portion dentée (10) est réalisée sous la forme d'une molette dont les nervures font saillie dans le sens radial au-dessus du diamètre extérieur du siège de centrage.

10. Arbre de direction selon l'une des revendications 1 à 9, **caractérisé en ce qu'**un pignon de direction (18) est prévu sur la première portion d'arbre (2).

11. Arbre de direction selon l'une des revendications 1 à 10, **caractérisé en ce que** l'élément de détection (5) présente un dispositif de captage (8) disposé en forme d'anneau.

12. Arbre de direction selon l'une des revendications 1 à 11, **caractérisé en ce qu'**un élément codeur (17) est positionné dans le sens axial sur un épaulement (19) de la deuxième portion d'arbre (3), l'élément codeur (17) se trouvant à l'opposé de l'élément de détection (5) sans contact et interagissant avec celui-ci pour détecter une rotation relative entre la première portion d'arbre (2) et la deuxième portion d'arbre (3).

13. Arbre de direction selon l'une des revendications 1 à 12, **caractérisé en ce qu'**un anneau magnétique est prévu comme élément codeur (17) sur la deuxième portion d'arbre (3), lequel se trouve à l'opposé de l'élément de détection (5) sans contact et interagit avec celui-ci pour détecter une rotation relative entre la première portion d'arbre (2) et la deuxième portion d'arbre (3).

14. Procédé de montage d'une unité de mesure de couple (4) sur un arbre de direction (1), lequel comprend une première portion d'arbre (2) et une deuxième portion d'arbre (3) qui sont reliées entre elles en rotation flexible, **caractérisé en ce qu'**un élément de détection (5) de l'unité de mesure de couple (4) est emmanché dans le sens axial sur un siège de centrage (9) cylindrique circulaire de la première portion d'arbre (2) puis enfoncé dans le sens axial sur une portion dentée (10) de la première portion d'arbre (2) lors de la poursuite de l'emmanchement.

15. Procédé selon la revendication 14, **caractérisé en ce que** l'élément de détection (5), avant d'être emmanché sur la première portion d'arbre (2), est tout d'abord déplacé dans le sens axial sur la deuxième portion d'arbre (3) sans toucher celle-ci.

16. Procédé selon la revendication 14 ou 15, **caractérisé en ce que** la force d'enfoncement pendant l'enfoncement axial sur la portion dentée (10) de la première portion d'arbre (2) est détectée.

17. Procédé selon l'une des revendications 14 à 16, **caractérisé en ce que** pour réaliser une liaison par complémentarité de forme entre la douille (6) de l'élément de détection (5) et la portion dentée (10) de la première portion d'arbre (2), une douille (6) composée de matière plastique avec laquelle l'élément de détection (5) est enfoncé sur la portion dentée (10) est chauffée et au moins partiellement plastifiée ou ouverte par fusion.
